Europäisches Patentamt

European Patent Office

Office européen des brevets

(19)

(11) Veröffentlichungsnummer: **0 177 699**
A2

(12) **EUROPÄISCHE PATENTANMELDUNG**

(21) Anmeldenummer: 85109720.4

(22) Anmeldetag: 02.08.85

(51) Int. Cl.⁴: **B 04 C 5/02,** B 04 C 9/00

---

(30) Priorität: 09.10.84 DE 3437037

(43) Veröffentlichungstag der Anmeldung: 16.04.86
**Patentblatt 86/16**

(84) Benannte Vertragsstaaten: **AT BE DE FR GB IT LU**

(71) Anmelder: **Krupp Polysius AG, Graf-Galen-Strasse 17, D-4720 Beckum (DE)**

(72) Erfinder: **Dürr, Manfred Julius, Dipl.-Ing., Im Bulte 18, D-4740 Oelde (DE)**

(74) Vertreter: **Tetzner, Volkmar, Dr.-Ing. Dr. Jur., Van-Gogh-Strasse 3, D-8000 München 71 (DE)**

---

(54) **Zyklonanordnung.**

(57) Die Erfindung betrifft eine Zyklonanordnung, bei der der in die horizontale Eintrittsspirale des Zyklons einmündende Teil der Gaszuführleitung schräg von oben nach unten verläuft und mit der Horizontalen einen Winkel zwischen 30 und 70° bildet. Dadurch werden störende Gutablagerungen im Einlaufbereich des Zyklons vermieden.

EP 0 177 699 A2

- 1 -

Zyklonanordnung

Die Erfindung betrifft eine Zyklonanordnung entsprechend dem Oberbegriff des Anspruches 1.

Bei Zyklonanordnungen der im Oberbegriff des Anspruches 1 vorausgesetzten Art verläuft der in die horizontale Eintrittsspirale des Zyklons einmündende Teil der Gaszuführleitung üblicherweise gleichfalls horizontal. Die Betriebserfahrungen mit derartigen Zyklonanordnungen zeigen nun, daß in diesem in die Eintrittsspirale des Zyklons einmündenden, horizontalen Teil der Gaszuführleitung vielfach Materialablagerungen auftreten, durch die die Gasströmung stark beeinträchtigt wird. Besonders gravierend werden diese Störungen bei Zyklonanordnungen, die für mit Feingut beladene Heißgase bestimmt sind, beispielsweise in Fällen, in denen der Zyklon die unterste Stufe eines zur Vorwärmung von Feingut dienenden mehrstufigen Zyklonwärmetauschers ist, die Gaszuführleitung die Abgasleitung eines dem Zyklonwärmetauscher nachgeschalteten, zum Fertigbrennen des vorgewärmten Feingutes dienenden Drehrohrofens bildet und die als Calcinator dienende Gaszuführleitung mit einer Einrichtung zur Zuführung von zusätzlichem Brennstoff versehen ist.

Hierbei begünstigen die am Eintritt zum Zyklon herrschenden Gas- und Guttemperaturen das Festkleben von Gutpartikeln an den relativ kälteren Wandungen der Gaszuführleitung beziehungsweise des Zyklons. Bei Verwendung von minderwertigen Brennstoffen in der als Calcinator dienenden Gaszuführleitung wird dieser nachteilige Effekt noch verstärkt, weil ein Teil dieser Brennstoffe erst im Zyklon beziehungsweise in dem in die Eintrittsspirale des Zyklons einmündenden Teil der Gutzuführleitung ausbrennt. Die unter Überhitzung entstandenen Gutablagerungen können sich dabei so verfestigen, daß sie sich mit üblichen Mitteln kaum noch entfernen lassen.

Besonders ungünstig werden die Verhältnisse in dem in die horizontale Eintrittsspirale des Zyklons einmündenden, gleichfalls horizontal verlaufenden Teil der Gaszuführleitung, wenn der vorhergehende Abschnitt der Gaszuführleitung vertikal von oben nach unten verläuft. In diesem Falle bewirken die bei der Umlenkung der Gutpartikel aus der Vertikalen in die Horizontale wirkenden Zentrifugalkräfte eine verstärkte Ablagerung von Gutteilchen in dem horizontalen Teil der Gaszuführleitung.

Der Erfindung liegt daher die Aufgabe zugrunde, unter Vermeidung dieser Nachteile eine Zyklonanordnung der im Oberbegriff des Anspruches 1 vorausgesetzten Art so auszubilden, daß störende Materialablagerungen in dem in die horizontale Eintrittsspirale des Zyklons einmündenden Teil der Gaszuführleitung vermieden werden.

Diese Aufgabe wird erfindungsgemäß durch das kennzeichnende Merkmal des Anspruches 1 gelöst.

Indem der in die horizontale Eintrittsspirale einmündende Teil der Gaszuführleitung schräg von oben nach unten verläuft und mit der Horizontalen einen Winkel zwischen 30 und 70°, vorzugsweise zwischen 40 und 60°, bildet, wird die Ablagerung von Gutpartikeln in diesem besonders kritischen Teil der Gaszuführleitung vermieden.

Um auch bei dieser schrägen Anströmung des Zyklons den erforderlichen Gaseintrittsquerschnitt zu realisieren, durchdringt der schräg von oben nach unten verlaufende Teil der Gaszuführleitung zweckmäßig teilweise die Decke des Zyklons.

Vergleichsmessungen ergaben, daß die erfindungs- gemäße Zyklonanordnung hinsichtlich Abscheide- grad und Druckverlust vergleichbare bzw. etwas bessere Werte gegenüber einer konventionellen Zyklonanordnung aufweist.

Ein Ausführungsbeispiel der Erfindung ist in der Zeichnung veranschaulicht. Es zeigen

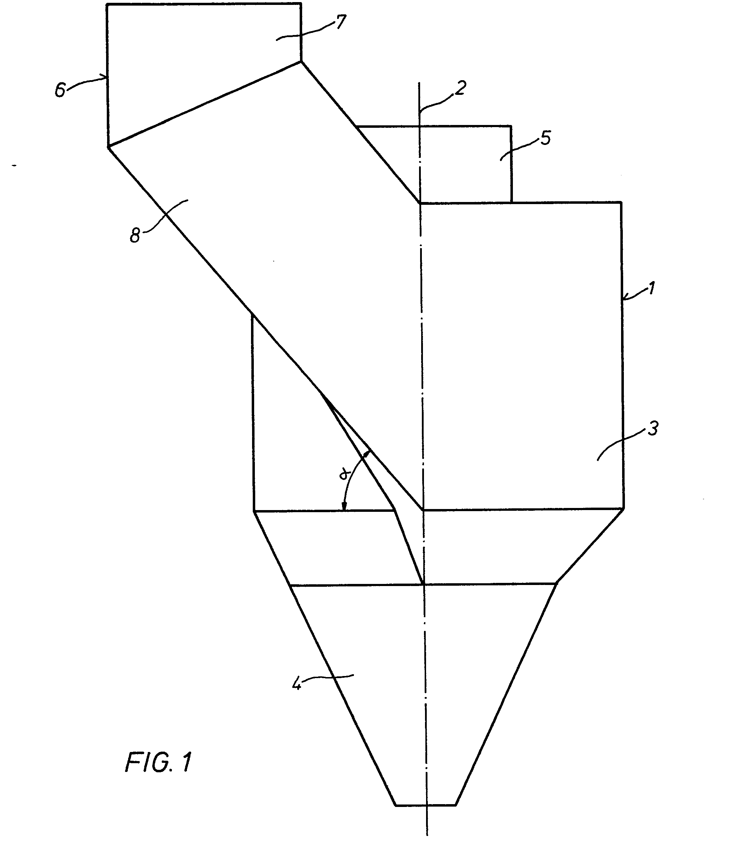

Fig. 1     eine Seitenansicht der erfindungsgemäßen Zyklonanordnung,

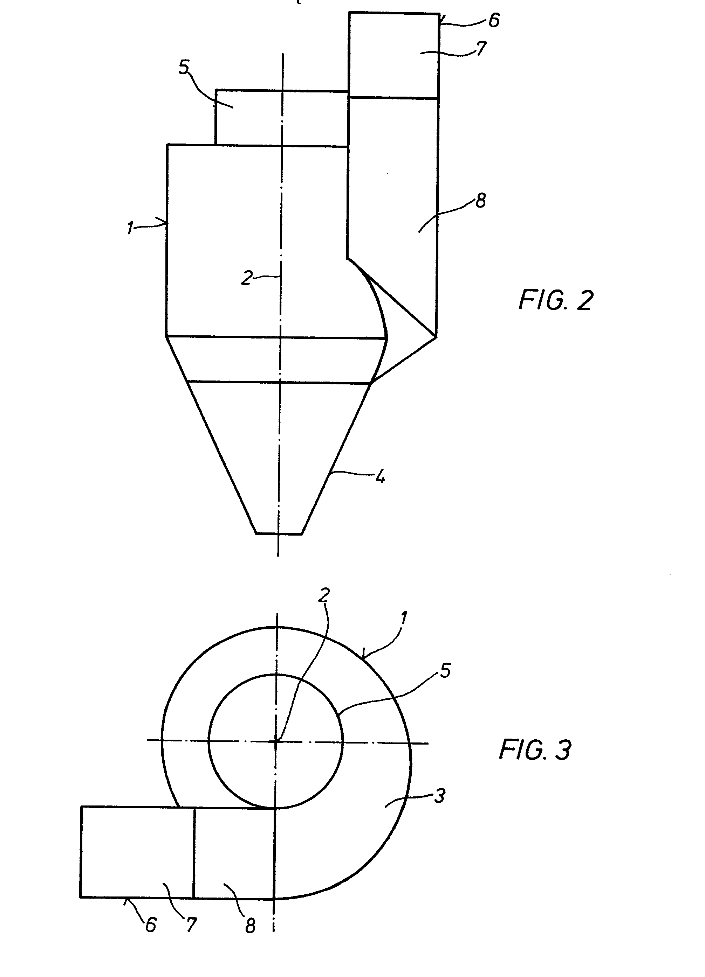

Fig. 2     eine gegenüber Fig. 1 um 90° gedrehte Seitenansicht,

Fig. 3     eine Aufsicht auf die Zyklonanordnung gemäß Fig. 1.

Die in der Zeichnung dargestellte Zyklonanordnung enthält einen Zyklon 1 mit vertikaler Achse 2, horizontaler Eintrittsspirale 3, Abscheidetrichter 4 und Tauchrohr 5.

Eine nur teilweise dargestellte Gaszuführleitung 6 enthält einen vertikal von oben nach unten verlaufenden Leitungsteil 7 und einen schräg von oben nach unten verlaufenden Leitungsteil 8, der in die horizontale Eintrittsspirale 3 einmündet und der mit der Horizontalen einen Winkel $\alpha$ zwischen 30 und 70°, vorzugsweise zwischen 40 und 60° bildet. Dieser schräg von oben nach unten verlaufende Leitungsteil 8 durchdringt teilweise die Decke des Zyklons 1, um den erforderlichen Eintrittsquerschnitt für das Gas zu gewährleisten. Wie die Zeichnung erkennen läßt, liegt auf diese Weise der Leitungsteil 8 teilweise unmittelbar neben dem Tauchrohr 5.

Der dargestellte Zyklon 1 kann beispielsweise die unterste Stufe eines zur Vorwärmung von Feingut dienenden, mehrstufigen Zyklonwärmetauschers bilden, wobei die Gaszuführleitung 6 die Abgasleitung eines dem Zyklonwärmetauscher nachgeschalteten, zum Fertigbrennen des vorgewärmten Feingutes dienenden Drehrohrofens darstellt. Die Gaszuführleitung 6 ist diesem Falle zweckmäßig als Calcinator ausgebildet und mit wenigstens einer Einrichtung zur Zuführung von zusätzlichem Brennstoff versehen.

Da bei einem solchen Anwendungsfall die Gas- und Guttemperaturen am Ende der Gaszuführleitung 6, d.h. am Übergang in den Zyklon 1, besonders hoch sind, die Gefahr von Anbackungen daher sehr groß ist, erweist es sich als besonders vorteilhaft, daß durch die schräge Einführung der Gaszuführleitung 6 in den Zyklon 1 Materialablagerungen in dieser Einlaufzone weitestgehend vermieden sind.

Dr.-Ing. Dr. jur. VOLKMAR TETZNER

RECHTSANWALT und PATENTANWALT

Van-Gogh-Straße 3
8000 MÜNCHEN 71
Telefon: (089) 79 88 03
Telegramme: „Tetznerpatent München"
Telex: 5 212 282 pate d

P 5652

Patentansprüche:

1. Zyklonanordnung, insbesondere für mit Feingut
   beladene Heißgase, enthaltend

   a) einen Zyklon (1) mit vertikaler Achse (2)
      und horizontaler Eintrittsspirale (3),

   b) eine in die Eintrittsspirale (3) des Zyklons
      (1) einmündende Gaszuführleitung (6),

   dadurch gekennzeichnet, daß

   c) der in die horizontale Eintrittsspirale (3)
      einmündende Teil (8) der Gaszuführleitung
      (6) schräg von oben nach unten verläuft und
      mit der Horizontalen einen Winkel ($\alpha$)
      zwischen 30 und 70°, vorzugsweise zwischen
      40 und 60°, bildet.

2. Zyklonanordnung nach Anspruch 1, dadurch gekennzeichnet, daß der schräg von oben nach unten verlaufende Teil (8) der Gaszuführleitung (6) die
   Decke des Zyklons (1) teilweise durchdringt.

3. Zyklonanordnung nach Anspruch 1, dadurch gekennzeichnet, daß der in den schräg verlaufenden Leitungsteil (8) einmündende Teil (7) der Gaszuführleitung (6) vertikal von oben nach unten verläuft.

4. Zyklonanordnung nach Anspruch 1, gekennzeichnet durch folgende Merkmale:

a) Der Zyklon (1) bildet die unterste Stufe eines zur Vorwärmung von Feingut dienenden, mehrstufigen Zyklonwärmetauschers;

b) die Gaszuführleitung (6) ist die Abgasleitung eines dem Zyklonwärmetauscher nachgeschalteten, zum Fertigbrennen des vorgewärmten Feingutes dienenden Drehrohrofens;

c) die als Calcinator dienende Gaszuführleitung (6) ist mit wenigstens einer Einrichtung zur Zuführung von zusätzlichem Brennstoff versehen.

FIG. 1

FIG. 2

FIG. 3